(19) Europäisches Patentamt
European Patent Office
Office européen des brevets

(11) **EP 2 296 016 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
*G01V 5/00* *(2006.01)*   *G01T 1/167* *(2006.01)*

(21) Anmeldenummer: **10009438.2**

(22) Anmeldetag: **10.09.2010**

(54) **Verfahren zur Erfassung einer Kontamination an einem bewegten Objekt sowie Messvorrichtung hierzu**

Method for recording contamination on a moved object and measuring device

Procédé d'établissement d'une contamination sur un objet mobile et dispositif de mesure correspondant

(84) Benannte Vertragsstaaten:
AL AT BE BG CH CY CZ DE DK EE ES FI FR GB GR HR HU IE IS IT LI LT LU LV MC MK MT NL NO PL PT RO SE SI SK SM TR

(30) Priorität: **15.09.2009 DE 102009042054**

(43) Veröffentlichungstag der Anmeldung:
**16.03.2011 Patentblatt 2011/11**

(73) Patentinhaber: **Mirion Technologies(RADOS) GmbH**
**22761 Hamburg (DE)**

(72) Erfinder:
• **Kölln, Ingo**
**22609 Hamburg (DE)**
• **Van Bree, Daan**
**7944 RT Meppel (NL)**

(74) Vertreter: **Hauck Patentanwaltspartnerschaft mbB**
**Postfach 11 31 53**
**20431 Hamburg (DE)**

(56) Entgegenhaltungen:
**US-A1- 2003 178 575**

• **RUNKLE R C ET AL: "Point source detection and characterization for vehicle radiation portal monitors", IEEE TRANSACTIONS ON NUCLEAR SCIENCE IEEE USA, Bd. 52, Nr. 6, Dezember 2005 (2005-12), Seiten 3020-3025, XP002694971, ISSN: 0018-9499**
• **ILAN YAAR ET AL: "Decreasing the Minimum Detectable Level of an advanced spectroscopic portal by using multiple detector approach", NUCLEAR SCIENCE SYMPOSIUM CONFERENCE RECORD, 2008. NSS '08. IEEE (19-25 OCT. 2008), IEEE, PISCATAWAY, NJ, USA, 19. Oktober 2008 (2008-10-19), Seiten 656-659, XP031419488, ISBN: 978-1-4244-2714-7**
• **WAHL ET AL: "Studies for software optimization for gross counting portal monitors", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, Bd. 574, Nr. 1, 31. März 2007 (2007-03-31) , Seiten 185-191, XP022011296, ISSN: 0168-9002, DOI: 10.1016/J.NIMA.2007.01.165**
• **MARISCOTTI M A: "A method for automatic identification of peaks in the presence of background and its application to spectrum analysis", NUCLEAR INSTRUMENTS AND METHODS NETHERLANDS, Bd. 50, Nr. 2, Mai 1967 (1967-05), Seiten 309-320, XP002694972, DOI: 10.1016/0029-554X(67)90058-4**

**Beschreibung**

Die vorliegende Erfindung betrifft ein Verfahren zur Erfassung einer Kontamination an einem bewegten Objekt, das sich in einer Längsrichtung an mehreren Detektoren vorbei bewegt. Die Erfindung betrifft ebenfalls eine Messvorrichtung zur Erfassung einer radioaktiven Kontamination von einem Objekt, das sich in einer Längsrichtung durch die Messvorrichtung bewegen kann.

Es ist üblich, an Ein- und Ausgängen von kerntechnischen Anlagen, aber auch an Grenzübergängen, Flughäfen oder allgemein an Ein- und Ausgängen von Gebäuden oder Gebieten Kontrollen auf den Transport von radioaktiven Quellen durchzuführen. Die durchgeführten Kontrollen dienen einerseits zum Schutz der Personen und können andererseits auch den illegalen Transport von radioaktivem Material aufdecken. Nachfolgend werden diese beiden Aspekte zur Erfassung einer Kontamination zusammengefasst, wenn von zu erfassenden oder zu prüfenden Objekten gesprochen wird. Typischerweise werden die zu prüfenden Objekte, dies können Personen, Fracht und/oder Fahrzeuge sein, durch einen sogenannten Portalmonitor geleitet, bei dem seitlich zur Bewegungsrichtung des Objekts Detektoren für Gammastrahlung und/oder für Gamma- und Neutronenstrahlung vorgesehen sind.

Der eingesetzte Portalmonitor kann bei einem stetigen Fluss von zu prüfenden Objekten zu einem Nadelöhr werden, an dem sich ein Rückstau bildet. Bei der Kontrolle von Personen an den Ein- und Ausgängen treten dann Wartezeiten auf. Auch bei Containerkontrollen beispielsweise im Hafen kann es durch die Wartezeit zu einer Verlangsamung der abgefertigten Container kommen. Die benötigte Messzeit für ein Objekt in einem Portalmonitor hängt direkt mit der geforderten Nachweisgrenze des Monitors zusammen. Ein empfindlicherer Monitor kann bei niedrigerer Nachweisgrenze einen höheren Durchfluss von Objekten pro Zeit bewältigen, wobei die Verwendung von empfindlicheren Monitoren selbstverständlich mit höheren Kosten verbunden ist.

Aus US 2003/0178575 A1 ist ein Verfahren und ein Gerät zur Strahlungsüberwachung bekannt. Mehrere entlang der Fahrtrichtung eines Fahrzeugs aufgestellte Detektoren sind mit Positionserfassungssensoren ausgestattet. Die Positionserfassungssensoren stellen fest, wann ein Fahrzeug sich im Messbereich eines Detektors befindet und versehen dessen Messwerte mit zugehörigen Zeitstempeln. Anhand der Zeitstempel können Messwerte dann ausgewertet werden, wobei Messwerte, die von einem im Messbereich befindlichen Fahrzeug stammen, gemittelt werden.

Aus Robert C. Runkle et al. "Point Source Detection and Characterization for Vehicle Radiation Portal Monitors", IEEE Transactions on Nuclear Science, Vol. 52, No. 6, December 2005 wird ein Auswertverfahren von Messwerten an bewegten Objekten vorgestellt, bei dem die Messwerte mit einer Glockenkurve korreliert werden. Die Glockenkurve entspricht einer sich bewegenden, punktförmigen Strahlungsquelle.

Aus Ilan Yaar et al. "Decreasing the Minimum Detectable Level of an advanced spectroscopic portal by using multiple detector approach" in Nuclear Science Symposium Conference Record 2008, 656-659 ist ein Verfahren bekannt, bei dem die Anzahl der ausgelesenen Detektoren zur Absenkung der Nachweisgrenze reduziert wird.

J Aus C.G. Wahl et al. "Studies for Software Optimization for Gross Counting Portal Monitors" in Nuclear Instruments and Methods in Physics Research A 574 (2007) 185 - 191 wird eine Auswertmethode für Zählwerte vorgestellt, bei der die Zählwerte eines zentralen Kanals gewichtet mit den Zählwerten benachbarter Kanäle ausgewertet werden. Dadurch entsteht eine Glättung der Messwerte, die eine Herabsetzung der Auslöseschwelle erlaubt.

Der Erfindung liegt die Aufgabe zugrunde, ein Verfahren sowie eine Messvorrichtung zur Erfassung einer Kontamination an einem bewegten Objekt bereitzustellen, die mit möglichst einfachen Mitteln die Nachweisgrenze senken und eine genaue Messung erlauben.

Erfindungsgemäß wird die Aufgabe durch ein Verfahren mit den Merkmalen aus Anspruch 1 gelöst. Die Aufgabe wird ebenfalls durch eine Messvorrichtung mit den Merkmalen aus Anspruch 6 gelöst. Vorteilhafte Ausgestaltungen bilden den Gegenstand der Unteransprüche.

Bei dem erfindungsgemäßen Verfahren zur Erfassung einer Kontamination an einem bewegten Objekt, bewegt sich das zu messende Objekt in Längsrichtung an mehreren Detektoren vorbei. Erfindungsgemäß wird während der Bewegung des Objekts an den Detektoren vorbei von jedem der Detektoren mehrfach eine Zählrate erfasst. Die erfassten Zählraten werden gewichtet. Bei der Gewichtung werden die Zählraten des oder derjenigen Detektoren, die einen größeren Abstand zu dem zu messenden Objekt besitzen, geringer gewichtet als die Zählraten des oder der Detektoren, die einen geringeren Abstand besitzen. Hierbei bezieht sich die Wichtung einer zu einem Zeitpunkt von einem Detektor erfassten Zählrate auf den Abstand des Objekts zu dem Detektor in dem Zeitpunkt, in dem die Zählrate erfasst wurde. Während der Bewegung des Objekts werden durch die mehrfache Erfassung der Zählraten zu mehreren Zeitpunkten die Zählraten der einzelnen Detektoren erfasst. Vor einer Auswertung der Zählraten, die mit üblichen statistischen Verfahren durchgeführt werden kann, erfolgt eine Gewichtung der Zählraten. Bei dieser Gewichtung werden Zählraten derjenigen Detektoren, die zur Erfassung der Zählrate weit vom Objekt entfernt sind, schwächer gewichtet als die Zählraten von Detektoren, die im Zeitpunkt der Erfassung der Zählrate näher an dem Objekt sind. Durch die Gewichtung der Zählraten wird die Hintergrundzählrate der Detektoren, die sich nicht in der Nähe des Objektes befinden, reduziert und somit die Nachweisgrenze der gesamten Messvorrichtung deutlich gesenkt. Wichtig an der Erfindung ist, dass die Empfindlichkeit oder die Auflösung der verwendeten Detektoren nicht geändert werden muss, sondern dass lediglich durch Gewichtung der zeitlich hintereinander aufgenommenen Zählraten an mehreren Detektoren die Nachweisgrenze deutlich reduziert werden kann. Erfindungsgemäß kann bei gleichem Detektorvolumen und bei gleicher Bauart der Detektoren eine deutlich bessere Nachweisgrenze der Messvorrichtung erreicht werden.

Erfindungsgemäß wird aus dem zeitlichen Verlauf eines Maximums der Zählraten der Detektoren die Position des Objekts bestimmt. Wenn Zählraten an den einzelnen Detektoren auftreten, die oberhalb der Hintergrundzählrate liegen, dann wandert diese erhöhte Zählrate gemeinsam mit der Bewegung des Objekts an Detektoren vorbei. Je nach zeitlicher Auflösung, mit der die Zählraten erfasst werden, kann auch an den Zählraten eines Detektors festgestellt werden, dass das mit näher kommendem Objekt die Zählrate zunimmt und mit zunehmender Entfernung des Objekts wieder fällt. Indem dieses Maximum verfolgt wird, kann die Bewegung des Objekts an den Detektoren vorbei rekonstruiert werden, um so die Position des Objekts zu den einzelnen erfassten Zählraten bestimmt werden.

In einer bevorzugten Ausgestaltung der Erfindung werden die Zählraten des Detektors, der sich am nächsten zu dem Objekt befindet, am stärksten gewichtet und die Zählraten der angrenzenden Detektoren jeweils mit gleichem Faktor schwächer gewichtet. Es versteht sich hierbei von selbst, dass die gewichteten Zählraten vor einer Auswertung der Zählrate normiert werden müssen, damit die Wichtung nicht die Auswertung im Hinblick auf vorbestimmte Schwellwerte oder andere absolut vorgegebene Größen verändert.

In einer bevorzugten Ausgestaltung werden die Detektoren, die weiter als ein Detektor von dem Objekt entfernt liegen, mit dem Gewicht Null gewichtet. Dies bedeutet, dass höchstens drei Detektoren in der Messvorrichtung gleichzeitig aus-gewertet werden. In den Phasen, in denen das Objekt in die Messvorrichtung ein- oder austritt, können auch lediglich ein oder zwei Detektoren ausgewertet werden sein.

In einer bevorzugten Ausgestaltung werden die mit dem Gewicht Null gewichteten Detektoren ausgeschaltet, so dass an diesen keine Zählrate erfassen wird.

In einer bevorzugten Ausgestaltung wird die Kontamination erfasst, wenn einer der Detektoren eine Zählrate aufweist, die über einem bestimmten Schwellwert liegt. Hierdurch ist sichergestellt, dass für eine sich mit einer ungleichmäßigen Geschwindigkeit an den Detektoren vorbeibewegende Strahlungsquelle eine Kontamination dann erkannt wird, wenn die Strahlungsquelle mindestens vor einem der Detektoren länger verweilt, so dass dessen Zählrate ansteigt. Ein solcher Fall kann beispielsweise auftreten, wenn eine Strahlungsquelle mit einem bewegten Bein vergleichsweise schnell an den Detektoren vorbeibewegt wird und erst mit dem stehenden Bein ausreichend lange vor einem der Detektoren verweilt, um erfasst zu werden.

Die erfindungsgemäße Aufgabe wird ebenfalls durch eine Messvorrichtung zur Erfassung einer radioaktiven Kontamination mit den Merkmalen aus Anspruch 6 gelöst.

Das zu erfassende Objekt kann sich in einer Längsrichtung durch die Messvorrichtung bewegen. Erfindungsgemäß besitzt die Messvorrichtung mehrere Detektoren, die in Längsrichtung zur Erfassung einer sich durch die Messvorrichtung bewegenden Strahlungsquelle hintereinander angeordnet sind. Ferner ist erfindungsgemäß eine Auswerteeinrichtung vorgesehen, die eine Zählrate jedes der Detektoren während einer Bewegung des Objektes durch die Messvorrichtung erfasst. Nach der Bewegung des Objekts durch die Messvorrichtung liegen in der Auswerteeinrichtung mehrere erfasste Zählraten von jedem der Detektoren vor. Erfindungsgemäß werden die gemessenen Zählraten der Detektoren durch die Auswerteeinrichtung gewichtet, indem die Zählraten des oder der Detektoren, die einen größeren Abstand zu dem zu messenden Objekt besitzen, geringer gewichtet werden als die Zählrate des oder der Detektoren, die einen geringeren Abstand zum Objekt aufweisen. Bei der erfindungsgemäßen Messvorrichtung tragen diejenigen Detektoren die weiter von dem Objekt entfernt sind, nicht zur Hintergrundzählrate bei, so dass eine niedrigere Nachweisgrenze für eine radioaktive Kontamination erzielt werden kann. Erfindungsgemäße wird aus dem zeitlichen Verlauf der Zählraten an den einzelnen Detektoren die Position des Objekts zu erfassen. Hierbei bestimmt die Auswerteeinrichtung aus dem zeitlich aufeinanderfolgend erfassten Zählraten an den Detektoren die Position des Objekts und kann so den Gewichtungsfaktor festlegen.

Die Auswerteeinrichtung kann an Hand der Position feststellen, welche Entfernung das Objekt bei der aktuell erfassten Zählrate besitzt und kann so den vorgesehenen Gewichtungsfaktor für diese Zählrate bestimmen.

In einer bevorzugten Weiterbildung der erfindungsgemäßen Messvorrichtung kann die Auswerteeinrichtung für den Fall, dass die maximal auftretenden Zählraten eines der Detektoren oberhalb eines vorbestimmten Schwellwerts liegen, ein Warnsignal auslösen, das eine mögliche Kontamination anzeigt.

Eine bevorzugte Ausgestaltung der Erfindung wird nachfolgend näher erläutert. Es zeigt:

Fig. 1　　eine Messvorrichtung mit drei hintereinander angeordneten Detektoren,

Fig. 2　　eine herkömmliche Messvorrichtung mit einem Detektor,

Fig. 3　　die Bewegung eines Objekts an den Detektoren vorbei, wobei sich das Objekt vor dem ersten Detektor befindet,

Fig. 4    die Bewegung eines Objekts an den Detektoren vorbei, wobei sich das Objekt vor dem zweiten Detektor befindet,

Fig. 5    die Bewegung eines Objekts an den Detektoren vorbei, wobei sich das Objekt vor dem dritten Detektor befindet, und

Fig. 6    den Verlauf der Zählraten bei drei hintereinander angeordneten Detektoren im Vergleich zu einem herkömmlichen Portalmonitor gleicher Länge.

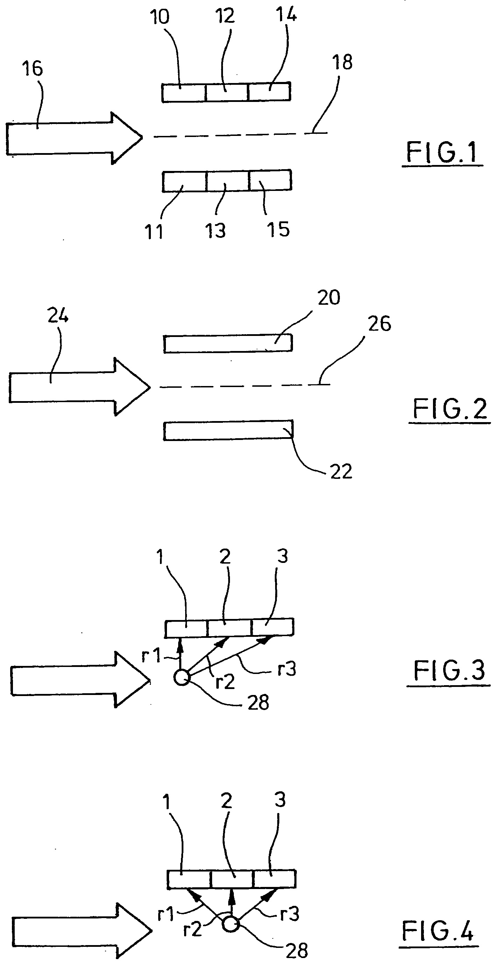

Fig. 1 zeigt einen Portalmonitor für radioaktive Strahlung, der drei paarweise einander gegenüberliegend angeordnete Detektoren 10 bis 15 aufweist. Bei den Detektoren kann es sich um Plastik-Szintillationsdetektoren und um $^3$He-Röhren bestückte Neutronendetektoren handeln. Grundsätzlich können aber auch andere für den Einsatz eines Portalmonitors geeignete Detektoren eingesetzt werden. Für die Detektorenpaare 10/11, 12/13 und 14/15 ist eine Durchflussrichtung 16 vorgesehen. In den dargestellten Beispielen sei angenommen, dass die Durchflussrichtung bezogen auf die Figuren von links nach rechts orientiert sei, so dass das zu messende Objekt zuerst an den Detektoren 10/11 vorbeiläuft und danach an den Detektorenpaaren 12/13 und 14/15. Der Begriff Durchflussrichtung ist hier keineswegs darauf beschränkt, dass Objekte durch den Portalmonitor fließen, vielmehr können sie sich auch auf Personen beziehen, die sich in Durchflussrichtung 16 durch den Portalmonitor bewegen. Die Durchflussrichtung 16 läuft entlang der Längsrichtung 18 des Portalmonitors.

Fig. 2 zeigt einen herkömmlichen Portalmonitor in einer schematischen Ansicht. Dieser Portalmonitor besitzt zwei einander gegenüberliegende Detektoren 20 und 22, die für ein sich in Durchflussrichtung 24 der Längsrichtung 26 bewegendes Objekt eine Zählrate ermitteln. Im Weiteren sei die Durchgangszeit des Objekts durch den Portalmonitor $t_B$. Um einen besseren Vergleich der Portalmonitore aus Fig. 1 und Fig. 2 zu ermöglichen, sei die Durchgangszeit beider Portalmonitore gleich groß und mögen die gleiche Länge in Längsrichtung 18 bzw. 26 besitzen.

Jeder der Detektoren, auch die Detektoren 20, 22 oder die Detektoren 10 - 15, erfasst eine Hintergrundzählrate, die auch dann auftritt, wenn sich keine radioaktive Probe an dem Detektor befindet. Selbstverständlich kann jeder der genannten Detektoren mehrere Messkanäle besitzen, wobei dann die Hintergrundszählrate pro Messkanal zu berücksichtigen ist. Während des eigentlichen Messvorgangs erfasst jeder Detektor eine Bruttozählrate für jeden seiner Messkanäle, die sich zusammensetzt aus Hintergrundzählrate und der durch das zu messende Objekt verursachten Nettozählrate. Die Hintergrundzählrate kann beispielsweise vor Benutzung des Portalmonitors erfasst werden oder vorbestimmt sein.

Bei der Messeinrichtung gemäß Fig. 2 liegt nach der Durchgangszeit $t_B$ eine Zählrate vor, die eine Aussage über die erfasste Kontamination macht. Entscheidend für den Einsatz des Portalmonitors ist seine Nachweisgrenze, die beispielsweise in ISO 11929-1 definiert ist. Zur Vereinfachung sei angenommen, dass die Hintergrundmesszeit groß gegenüber der Durchgangszeit des Objekts ist. Dann ergibt sich die Nachweisgrenze NWG zu folgendem Ausdruck:

$$NWG \, \alpha \, \frac{\sqrt{r_o}}{t_b \eta}$$

wobei $r_0$ die Grundzählrate [1/s], $t_B$ die Durchgangszeit [s] und $\eta$ den Wirkungsgrad eines Detektors bezüglich einer definierten radioaktiven Quelle [Bq/s] bezeichnet. Deutlich erkennbar an der Formel ist, dass mit zunehmender Hintergrundszählrate die Nachweisgrenze größer wird, um die vorgegebene Nachweisgrenze zu erreichen; daher ist bei zunehmender Hintergrundzählrate die Gesamtmesszeit zu verlängern, um die gewünschte Nachweisgrenze zu erreichen.

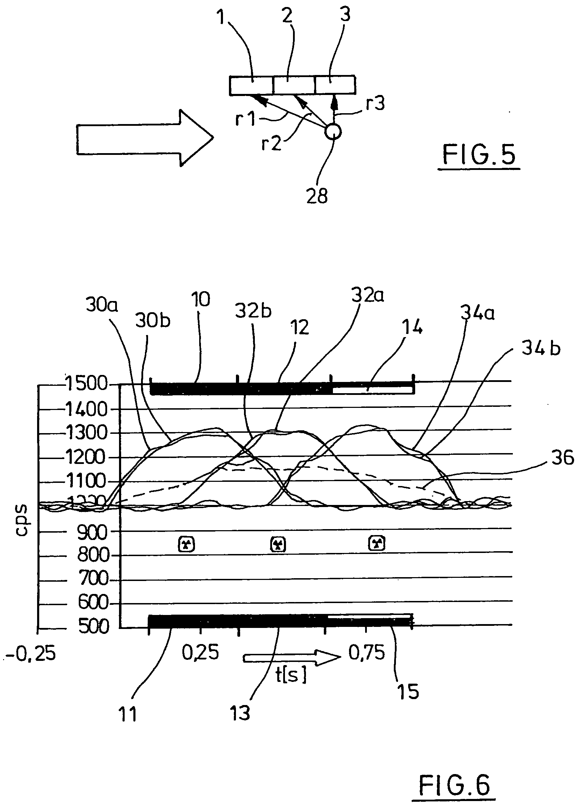

Bei der erfindungsgemäßen Messvorrichtung, bewegt sich das zu messende Objekt 28 an den Detektoren vorbei. Fign. 3 bis 5 zeigen die Bewegung eines Objekts 28 an den Detektoren vorbei. Die Detektoren sind zur besseren Übersicht lediglich auf einer Seite des Portalmonitors dargestellt und mit den Bezugszeichen 1, 2 und 3 versehen. Während des Zeitintervalls $t_1$ liegt die in Fig. 3 dargestellte Situation vor, bei der das Objekt 28 sich mit dem Abstand r1 vor dem Detektor 1 befindet und den Abstand r2 von dem Detektor 2 und den Abstand r3 von dem Detektor 3 besitzt. Während des Zeitintervalls t2 befindet sich das Objekt unmittelbar vor dem Detektor 2 mit einem Abstand r2 und besitzt zu den Detektoren 1 und 3 einen Abstand r1 bzw. r3. Fig. 5 zeigt die Situation, in der sich das Objekt 28 mit einem Abstand r3 unmittelbar im Detektor 3 befindet und die Abstände r1 und r2 zu den Detektoren 1 bzw. 2 besitzt.

Berücksichtigt man nun, dass der Wirkungsgrad des weiter vom Objekt entfernten Detektors kleiner ist als der Wirkungsgrad eines Detektors, vor dem sich das Objekt unmittelbar befindet, so ergibt sich folgende Tabelle:

| | $\eta_1$ | $\eta_2$ | $\eta_3$ | Summe |
|---|---|---|---|---|
| t1 | 1 | 0,5 | 0 | 1.5 |
| t2 | 0,5 | 1 | 0,5 | 2 |
| t3 | 0 | 0,5 | 1 | 1,5 |
| T=t1+t2+t3 | 1,5 | 2 | 1,5 | 5 |

Nimmt man nun an, um die Messvorrichtungen aus Fig. 1 und Fig. 2 miteinander zu vergleichen, dass die Hintergrundzählrate während der Dauer eines Zeitintervalls 1 betrage, so ergibt sich bei Messanordnung aus Fig. 2 eine Nachweisgrenze NWG von:

$$NWG_{\text{integral}} \approx \left(\sqrt{9}\right)/3*5$$

wobei für die Hintergrundzählrate 9 angenommen wird, dass drei Zeitintervalle gemessen werden und Detektoren 20 und 22 die dreifache Länge der Detektoren 10, 12 und 14 besitzen. Dies ergibt eine Hintergrundzählrate von 9. Die Gesamtdauer beträgt 3 und der Wirkungsgrad der Anordnung ergibt sich zu 5 für die gesamte Messdauer, was sich aus der vorstehenden Tabelle ergibt.

Bei der erfindungsgemäßen Messvorrichtung gemäß Fig. 1 kann die Messung des dritten Detektors im Zeitintervall 1 und die Messung des ersten Detektors im Zeitintervall T3 aus der Berechnung ausfallen, da diese bei einem Wirkungsgrad von Null keinen Betrag zur Messung geliefert haben. Damit ergibt sich eine Hintergrundzählrate von 9 - 2 =7 und die Nachweisgrenze nimmt proportional ab.

$$NWG_{\text{trend}} \approx \left(\sqrt{9-2}\right)/3*5$$

Vergleicht man beide Nachweisgrenzen, so stellt man fest, dass die Nachweisgrenze bei dem erfindungsgemäßen System um ungefähr 12 % niedriger ist als bei dem herkömmlichen System. Es kann also eine deutliche Verbesserung der Nachweisgrenze im gleichen aktiven Detektorvolumen erreicht werden, indem bei der Messung Zählraten einzelner Detektoren zeitlich aufgelöst betrachtet werden.

Um diese verbesserte Nachweisgrenze der Messvorrichtung gemäß Fig. 1 in einem Verfahren umzusetzen, werden die an den Detektoren während des Messvorgangs auftretenden Zählraten gewichtet. Bezogen auf das obige Beispiel bedeutet dies, dass während des Zeitintervalls t1 die Zählrate des Detektors 1 mit vollem Gewicht erfasst und die Zählrate des Detektors 2 mit einem Faktor 1/2 gewichtet wird. Die Zählrate des Detektors 3, die im Wesentlichen die Hintergrundstrahlung erfasst, wird in dem Zeitintervall t1 nicht berücksichtigt, sondern mit dem Faktor 0 gewichtet. In Fig. 4 gehen die in dem Zeitintervall t2 aufgenommenen Zählraten des Detektors 2 mit vollem Gewicht ein, während die Zählraten der Detektoren 1 und 3 mit einem niedrigeren Gewicht in die Auswertungsmessung eingehen. In Fig. 5 werden die Zählraten ähnlich wie in Fig. 3 gewichtet, wobei die Zählrate des Detektors 1 das Gewicht 0 besitzt und die Zählrate des Detektors 2 ein niedrigeres Gewicht als die Zählrate des Detektors 3 besitzt. Auf diese Weise wird während der Bewegung des Objekts 28 durch die Messvorrichtung die Zählrate der Detektoren 1 und 3 in Zeitintervallen 3 bzw. 1 vollständig unterdrückt und so die Nachweisgrenze verbessert.

Das vorstehende Verfahren wurde am Beispiel von drei hintereinander angeordneten Detektoren erläutert. Es versteht sich von selbst, dass das Verfahren auch mit einer größeren Anzahl Detektoren durchgeführt werden kann.

Fig. 6 zeigt beispielhaft den Verlauf der Zählraten, wenn sich die radioaktive Quelle an den Detektoren 10 bis 15 vorbeibewegt. Die Fig. 6 zeigt die erfassten Zählraten (cps) gegenüber der Zeit (t) aufgetragen. Deutlich zu erkennen ist, dass zu Beginn des Durchlaufs zunächst die Zählraten 30A, 30B der Detektoren 10 und 11 steigen. In dem nachfolgenden Zeitintervall, so ungefähr bei 0,3 Sekunden, steigen die Zählraten 32A und 32B an, während die Zählraten 30A, und 30B bereits wieder abfallen. Im nächsten Zeitintervall erreichen die Zählraten 34A und 34B der Detektoren 14 und 15 ihr Maximum. Deutlich zu erkennen ist, dass die Zählraten der Detektoren 14 und 15 zu Beginn des Messvorgangs mit ungefähr 1000 cps lediglich Hintergrundstrahlung erfassen. Die gestrichelt eingezeichnete Zählrate 36 entspricht der Zählrate, wie sie sich ergeben würde, wenn die Zählraten der Detektoren 10 bis 15 gemittelt würden. Zählrate 36 zeigt somit an, was ein herkömmlicher Portalmonitor beim Durchgang dieser Probe erfassen würde. Deutlich zu erkennen ist, dass auf Grund der Ortsauflösung der Detektoren, eine deutlich bessere Empfindlichkeit und damit eine niedrigere Nachweisgrenze erreicht werden kann.

**Patentansprüche**

1. Verfahren zur Erfassung einer Kontamination an einem bewegten Objekt, (28) das sich in einer Längsrichtung an mehreren Detektoren (1-3, 10-15) vorbeibewegt, wobei

   - während der Bewegung des Objekts (28) an den Detektoren (1-3, 10-15) vorbei von jedem der Detektoren mehrfach eine Zählrate erfasst wird,
   - die erfassten Zählraten gewichtet werden, indem die Zählraten des oder der Detektoren, die einen größeren Abstand von dem zu messenden Objekt besitzen, geringer gewichtet werden als die Zählraten des oder der Detektoren, die einen geringeren Abstand von dem zu messenden Objekt besitzen,
   - **dadurch gekennzeichnet, dass**

   aus dem zeitlichen Verlauf eines Maximums derz-Zählraten an den einzelnen Detektoren (1-3, 10-15) die Position des Objekts (28) bestimmt wird.

2. Verfahren nach Anspruch 1, **dadurch gekennzeichnet, dass** die Zählrate des Detektors, der sich am nächsten zu dem Objekt befindet, am stärksten gewichtet wird und die Zählraten der angrenzenden Detektoren jeweils mit gleichem Faktor schwächer gewichtet werden.

3. Verfahren nach Anspruch 2, **dadurch gekennzeichnet, dass** die Detektoren, die mehr als ein Detektor von dem Objekt entfernt liegen, mit Gewicht Null gewichtet werden.

4. Verfahren nach Anspruch 3, **dadurch gekennzeichnet, dass** die Detektoren, die mit Gewicht Null gewichtet werden, ausgeschaltet sind.

5. Verfahren nach einem der Ansprüche 1 bis 4, **dadurch gekennzeichnet, dass**, wenn einer der Detektoren eine Zählrate aufweist, die über einem vorbestimmten Schwellwert liegt, eine Kontamination erkannt wird.

6. Messvorrichtung zur Erfassung einer radioaktiven Kontamination von einem Objekt, (28) das sich in einer Längsrichtung durch die Messvorrichtung bewegen kann, die Messvorrichtung aufweisend:

- mehrere Detektoren, (1-3, 10-15) die in Längsrichtung zur Erfassung einer sich durch die Messvorrichtung bewegenden Strahlungsquelle angeordnet sind,
- eine Auswerteeinrichtung, die dazu eingerichtet ist, eine Zählrate jedes der Detektoren während einer Bewegung des Objektes (28) durch die Messvorrichtung mehrfach zu erfassen, wobei
- die Auswerteeinrichtung dazu eingerichtet ist, die gemessenen Zählraten der Detektoren zu gewichten, indem die Zählraten des oder der Detektoren, die einen größeren Abstand zu dem zu messenden Objekt besitzen, geringer gewichtet werden als die Zählraten des oder der Detektoren, die einen geringeren Abstand zu dem Objekt aufweisen und

**dadurch gekennzeichnet, dass**

- die Auswerteausrichtung ferner dazu eingerichtet ist, aus dem zeitlichen Verlauf der Zählraten an den einzelnen Detektoren (1-3, 10-15) die Position des Objekts (28) zu erfassen.

7. Messvorrichtung nach Anspruch 6, **dadurch gekennzeichnet, dass** die Auswerteeinrichtung für den Fall, dass die maximal auftretende Zählart eines der Detektoren oberhalb eines vorbestimmten Schwellwerts liegt, ein Warnsignal auslöst, das eine mögliche Kontamination anzeigt.

**Claims**

1. Method for detecting contamination on a moving object (28) moving in a longitudinal direction past a plurality of detectors (1-3, 10-15), wherein

- a count rate is captured repeatedly by each of the detectors during the movement of the object (28) past the detectors (1-3, 10-15),
- the captured count rates are weighted in that the count rates of the detector(s) that have a greater separation distance from the object to be measures are weighted lower than the count rates of the detector(s) that have a smaller separation distance from the object to be measured
- **characterized in that**

the position of the object (28) is determined from the temporal progression of a maximum of the count rates at the individual detectors (1-3, 10-15).

2. Method according to claim 1, **characterized in that** the count rate of the detector that is located closest to the object is weighted the strongest and the count rates of the adjacent detectors with the same factor are weighted weaker.

3. Method according to claim 2, **characterized in that** the detectors, which lie more than one detector away from the object, are weighted with a weight of zero.

4. Method according to claim 3, **characterized in that** the detectors that are weighted with a weight of zero are switched off.

5. Method according to one of claims 1 to 4, **characterized in that** contamination is detected when one of the detectors has a count rate that lies above a predetermined threshold value.

6. Measurement apparatus for detecting radioactive contamination of an object (28), which can move in a longitudinal direction through the measurement apparatus, the measurement apparatus comprising:

- a plurality of detectors (1-3, 10-15), which are arranged in the longitudinal direction for detecting a radiation source moving through the measurement apparatus,
- an evaluation device being adapted to capture repeatedly a count rate of each of the detectors during a movement of the object (28), wherein
- the evaluation device being adapted to weight the measured count rates of the detectors in that the count rates of the detector(s) that have a greater separation distance from the object to be measured are weighted lower than the count rate of the detector(s) that have a smaller separation distance from the object and
- **characterized in that**

the evaluation device is adapted to capture the position of the object (28) from the temporal progression of the count rates at the individual detectors (1-3, 10-15).

**7.** Measurement apparatus according to claim 6, **characterized in that** the evaluation device triggers a warning signal that indicates potential contamination for the case that the maximum occurring counting type of one of the detectors lies above a predetermined threshold value.

**Revendications**

**1.** Procédé de détection d'une contamination sur un objet (28) mobile qui se déplace en passant devant plusieurs détecteurs (1-3, 10-15) dans une direction longitudinale,

- un taux de comptage étant établi plusieurs fois par chacun des détecteurs pendant le déplacement de l'objet (28) devant les détecteurs (1-3, 10-15),
- les taux de comptage établis étant pondérés par le fait que les taux de comptage du ou des détecteurs qui possèdent un écart plus important à l'objet à mesurer sont pondérés plus faiblement que les taux de comptage du ou des détecteurs qui possèdent un écart plus faible à l'objet à mesurer,
- **caractérisé en ce que**

la position de l'objet (28) est définie à partir de l'allure dans le temps d'un maximum des taux de comptage sur les détecteurs (1-3, 10-15) individuels.

**2.** Procédé selon la revendication 1, **caractérisé en ce que** le taux de comptage du détecteur qui se trouve le plus près de l'objet est pondéré le plus fortement, et les taux de comptage des détecteurs adjacents sont pondérés respectivement plus faiblement avec le même facteur.

**3.** Procédé selon la revendication 2, **caractérisé en ce que** les détecteurs qui sont éloignés de plus d'un détecteur de l'objet sont pondérés avec un poids nul.

**4.** Procédé selon la revendication 3, **caractérisé en ce que** les détecteurs qui sont pondérés avec un poids nul sont mis hors circuit.

**5.** Procédé selon l'une des revendications 1 à 4, **caractérisé en ce que**, quand un des détecteurs présente un taux de comptage qui est supérieur à une valeur de seuil prédéfinie, une contamination est détectée.

**6.** Dispositif de mesure pour la détection d'une contamination radioactive d'un objet (28) qui peut se déplacer dans une direction longitudinale à travers le dispositif de mesure, le dispositif de mesure présentant :

- plusieurs détecteurs (1-3, 10-15)
qui sont disposés dans la direction longitudinale pour la détection d'une source de rayonnement se déplaçant à travers le dispositif de mesure,
- un dispositif d'analyse qui est conçu pour établir plusieurs fois un taux de comptage de chacun des détecteurs pendant un déplacement de l'objet (28) à travers le dispositif de mesure,
- le dispositif d'analyse étant conçu pour pondérer les taux de comptage mesurés des détecteurs par le fait que les taux de comptage du ou des détecteurs qui possèdent un écart plus important à l'objet à mesurer sont pondérés plus faiblement que les taux de comptage du ou des détecteurs qui présentent un écart plus faible à l'objet, et **caractérisé en ce que** le dispositif d'analyse est en outre conçu pour détecter la position de l'objet (28) à partir de l'allure dans le temps des taux de comptage sur les détecteurs (1-3, 10-15) individuels.

**7.** Dispositif de mesure selon la revendication 6, **caractérisé en ce que**, dans le cas où le taux de comptage maximal constaté d'un des détecteurs est supérieur à une valeur de seuil prédéfinie, le dispositif d'analyse déclenche un signal d'alarme qui indique une contamination possible.

FIG.1

FIG.2

FIG.3

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 20030178575 A1

**In der Beschreibung aufgeführte Nicht-Patentliteratur**

*   **ROBERT C. RUNKLE et al.** Point Source Detection and Characterization for Vehicle Radiation Portal Monitors. *IEEE Transactions on Nuclear Science,* Dezember 2005, vol. 52 (6
*   **ILAN YAAR et al.** Decreasing the Minimum Detectable Level of an advanced spectroscopic portal by using multiple detector approach. *Nuclear Science Symposium Conference Record,* 2008, 656-659
*   **C.G. WAHL et al.** Studies for Software Optimization for Gross Counting Portal Monitors. *Nuclear Instruments and Methods in Physics Research A,* 2007, vol. 574, 185-191